Europäisches Patentamt

European Patent Office

Office européen des brevets

(19)

(11) Veröffentlichungsnummer: **0 252 348**
**A1**

# (12) EUROPÄISCHE PATENTANMELDUNG

(21) Anmeldenummer: **87108766.4**

(22) Anmeldetag: **19.06.87**

(51) Int. Cl.³: **A 01 C 7/08**

(30) Priorität: **02.07.86 DE 3622078**

(43) Veröffentlichungstag der Anmeldung:
**13.01.88 Patentblatt 88/2**

(84) Benannte Vertragsstaaten:
**DE FR GB NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Gattermann, Bernd**
**Eichenwall 3**
**D-2872 Hude I.O.(DE)**

(54) **Pneumatische Verteilmaschine.**

(57) Pneumatische Verteilmaschine zum Verteilen von insbesondere Saatgut mit einem zentralen Dosiersystem (3) von dem aus das dosierte Saatgut über einen Verteilerkopf (4) den an dem Verteilerkopf über Saatleitungen (9) angeschlossenen Säscharen (5) gleichmäßig zugeführt wird, wobei einzelne Abgänge von dem Verteilerkopf über Absperreinrichtungen (11) derart verschließbar sind, daß einer geringeren Anzahl von Säscharen als der Anzahl von Abgängen an dem Verteilerkopf das Saatgut zuführbar ist. Um bei pneumatischen Sämaschinen mit einem zentralen Dosiersystem die Saatgutmenge der einzelnen Saatleitungen auch bei Absperrung einzelner Saatleitungen beizubehalten, ist vorgesehen, daß die an den zu verschließenden Abgängen angeordneten Absperreinrichtungen derart ausgebildet sind, daß das diesen Abgängen zudosierte Material wieder in den Vorratsbehälter (1) zurückleitbar ist.

FIG.1

Amazonen-Werke
H. Dreyer GmbH & Co. KG
Am Amazonenwerk 9 - 13
4507 Hasbergen-Gaste
ANR 1 000 667

## Pneumatische Verteilmaschine

Die Erfindung betrifft eine pneumatische Verteilmaschine gemäß des Oberbegriffes des Patentanspruches 1.

Derartige Verteilmaschinen sind in der Praxis bekannt geworden. Diese pneumatischen Verteilmaschinen weisen ein zentrales Dosiersystem auf, von dem aus das zentral dosierte Saatgut über eine senkrechtstehende Druckluftleitung einem Verteilerkopf mit mehreren Abgängen zugeleitet wird. Von den einzelnen Abgängen des Verteilerkopfes wird das aufgeteilte Material den über Saatleitungen an dem Verteilerkopf angeschlossenen Säscharen zugeführt. Diese in der Praxis bekannt gewordenen Verteilerköpfe weisen eine bestimmte Anzahl von Abgängen auf. In der Regel ist jeweils an sämtlichen Abgängen über jeweils ein Saatleitungsrohr jeweils ein Säschar angeschlossen. Es gibt jedoch Fälle, daß eine Verteilmaschine weniger Säschare als Abgänge am Verteilerkopf aufweist. In diesen Fällen werden dann einfach die überflüssigen Abgänge mit einem Blindstopfen verschlossen. Hierdurch ergibt sich der gravierende Nachteil, daß den unmittelbar neben den verschlossenen Abgängen liegenden Abgängen eine größere Menge Saatgut zudosiert wird als an den weiter von den abgeschwerten Abgängen entferntliegenden Abgängen. Somit wird den einzelnen Säscharen jeweils eine unterschiedliche Menge von Saatgut zugeleitet. Dieses ist im Hinblick auf die Ertragsoptimierung von erheblichem Nachteil.

Der gleiche Nachteil ergibt sich, wenn diese bekannte Verteilmaschine mit einer Fahrgassenschaltung ausgerüstet ist. Beim Anlegen der Fahrgassen werden die zu den Fahrgassensäscharen führenden Abgänge in der Nähe des Verteilerkopfes einfach abgesperrt. Die an sich den Fahrgassensäscharen zugeführte Saatgutmenge wird beim Anlegen von Fahrgassen zusätzlich auf die übrigen Saatleitungen über den Verteilerkopf aufgeteilt, wobei den einzelnen Säscharen dann unterschiedliche Saatgutmengen zudosiert werden. Dieses ist ebenfalls von einem erheblichen Nachteil.

Der Erfindung liegt nun die Aufgabe zugrunde, bei pneumatischen Sämaschinen mit einem zentralen Dosiersystem die Saatgutmenge der einzelnen Saatleitungen auch bei Absperrung einzelner Saatleitungen beizubehalten.

Dieser Aufgabe wird erfindungsgemäß bei einer pneumatischen Verteilmaschine gemäß des Oberbegriffes des Patentanspruches 1 dadurch gelöst, daß an den zu verschließenden Abgängen Absperrschieber angeordnet sind, über welche das diesen Abgängen zudosierte Material wieder in den Vorratsbehälter zurückleitbar ist. Infolge dieser Maßnahme wird sichergestellt, daß allen Saatleitungen auch bei Absperrung einzelner Abgänge an dem Verteilerkopf jeder Saatleitung bzw. jedem Säschar die gleiche Menge Saatgut zugeleitet wird. Eine Erhöhung der Menge des Saatgutes in der unmittelbaren Nähe der abgesprerrten bzw. des nicht benötigten Abganges tritt nicht auf, da das auf diesem nicht benötigten Abgang des Verteilerkopfes aufgeteilte Saatgut in den Vorratsbehälter zurückgeleitet wird. Hierbei kann es unter gewissen Umständen erforderlich sein, daß an diesem Abgang, der das Saatgut in den Vorratsbehälter zurückleitet ein Zyklon angeordnet ist, damit das Saatgut, ohne daß das im Vorratsbehälter befindliche Saatgut aufgewirbelt wird, im freien Fall nach unten fällt.

Bei einer pneumatischen Verteilmaschine, insbesondere einer Sämaschine, bei der eine Fahrgassenschalteinrichtung zur Absperrung der Saatgutzufuhr zu den Fahrgassensäscharen vorgesehen ist, ist erfindungsgemäß vorgesehen, daß über diese Absperreinrichtung bei dem Absperren der Saatgutzufuhr zu den Fahrgassensäscharen das den Fahrgassensäscharen zudosierte Material wieder in den Vorratsbehälter zurückgeleitet wird. Infolge dieser Maßnahme wird beim Anlegen von Fahrgassen erreicht, daß nicht auf einzelne Säschare eine größere Menge Saatgut zudosiert wird. Beim Anlegen von Fahrgassen wird somit die den einzelnen Säscharen zudosierte bzw. die auf die einzelnen Säschare aufgeteilte Saatgutmenge unverändert beibehalten. Das den Fahrgassensäscharen beim Anlegen der Fahrgassen an sich zudosierte Material wird durch die Absperrung der Saatleitungen über die Absperreinrichtung wieder in den Vorratsbehälter zurückgeleitet.

Des weiteren ist erfindungsgemäß vorgesehen, daß diese Absperreinrichtungen elektromagnetisch betätigbar sind. Infolge dieser Maßnahmen ergibt sich eine äußerst einfache Konstruktion und die Absperreinrichtungen lassen sich über eine Fernbedienungseinrichtung, beispielsweise über Elektrokabel unmittelbar von der Fahrgassenschaltung aus steuern.

Des weiteren ist erfindungsgemäß vorgesehen, daß die Absperreinrichtung für die Zurückleitung des Saatgutes in den Vorratsbehälter jeweils einen kleineren Querschnitt als in den entsprechenden Querschnitt der Saatleitungen aufweisen. Aufgrund dieser Maßnahme wird gewährleistet, daß der Staudruck innerhalb des Verteilerkopfes und der Druckluftleitung von dem zentralen Dosiersystem bis zu den Säscharen aufrechterhalten bleibt, damit eine gleichmäßige Saatgutaufteilung bzw. Saatgutförderung zu den Säscharen gewährleistet ist.

Des weiteren ist erfindungsgemäß vorgesehen, daß der Querschnitt der Öffnungen der zurückleitenden Leitungen der Absperreinrichtung einstellbar bzw. entsprechend kleiner eingestellt ist. Aufgrund dieser Maßnahme ist es möglich, daß der durch die in den Vorratsbehälter zurückführenden Leitungen entweichende Luftstrom entsprechend eingestellt werden kann, damit eine gleichmäßige Aufteilung sowie eine gleichmäßige Förderung des Saatgutes zu den Säscharen auch bei der Absperrung einzelner Abgänge des Verteilerkopfes erhalten bleibt.

Weitere Einzelheiten der Erfindung sind den übrigen Unteransprüchen, der Beispielsbeschreibung und den Zeichnungen zu entnehmen. Hierbei zeigen

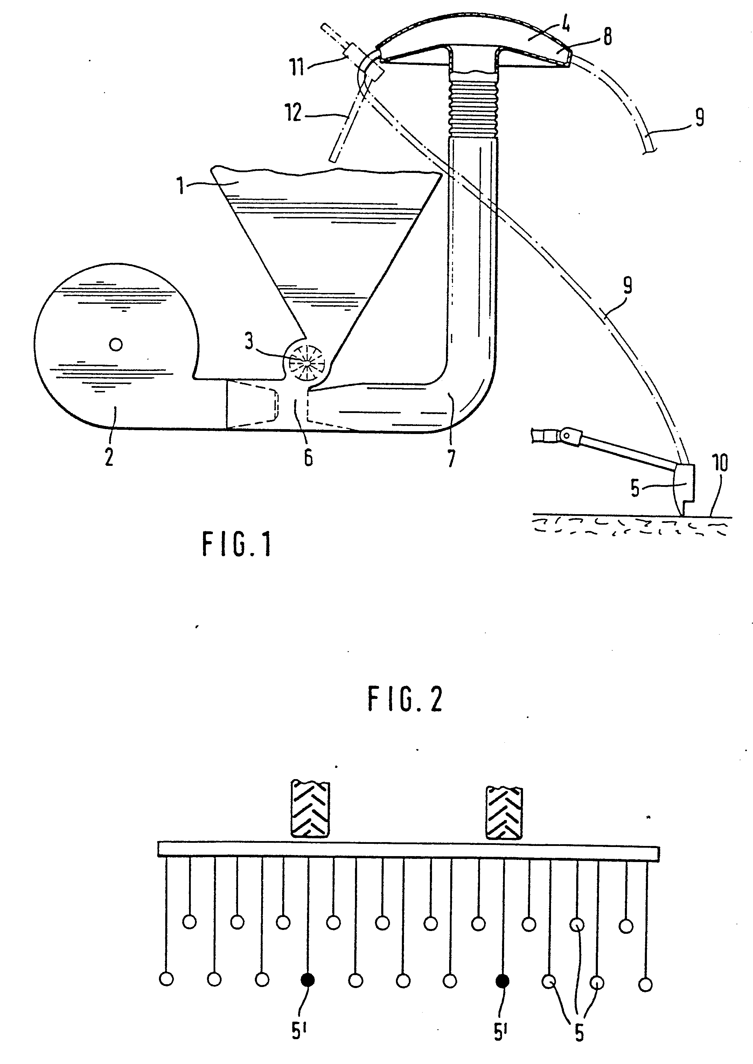

Fig. 1 das pneumatische Verteilersystem einer Sämaschine in Prinzipdarstellung,

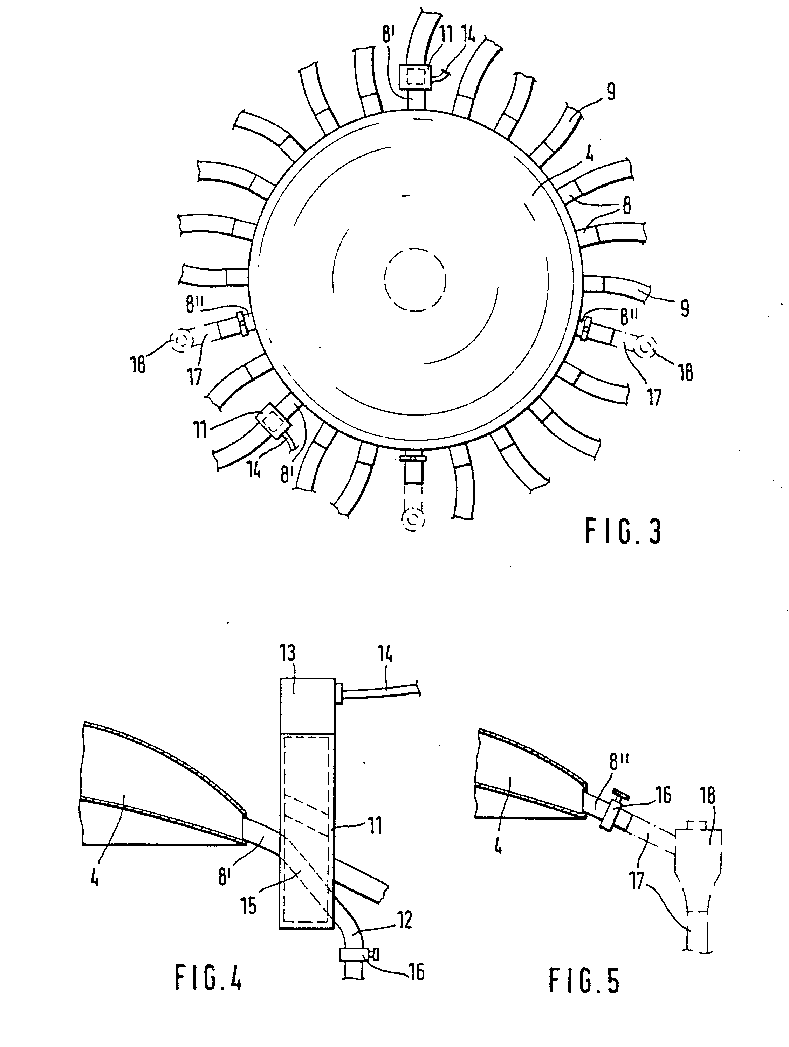

Fig. 2 die Anordnung der Säschare bei einer Sämaschine in der Draufsicht und in Prinzipdarstellung,

Fig. 3 den Verteilerkopf einer pneumatischen Verteilmaschine in der Draufsicht und in Prinzipdarstellung,

Fig. 4 eine erfindungsgemäß ausgebildete Absperreinrichtung für eine Abgangleitung an dem Verteilerkopf einer pneumatischen Verteilmaschine in der Seitenansicht und in Prinzipdarstellung und

Fig. 5 eine weitere erfindungsgemäße Absperreinrichtung an einem Verteilerkopf in Prinzipdarstellung und in der Seitenansicht.

Die als Sämaschine ausgebildete pneumatische Verteilmaschine weist den Vorratsbehälter 1, das Gebläse 2, das zentrale Dosierorgan 3, den Verteilerkopf 4 und die an einem Rahmen angelenkten Säschare 5 auf. Das sich im Vorratsbehälter 1 befindliche Saatgut wird über das zentrale Dosierorgan 3, welches von einem auf dem Boden abrollenden Rad in bekannter und daher nicht dargestellter Weise angetrieben wird, über die Schleuse 6 in die zentrale Förderleitung 7 gefördert, wo es von dem von dem Gebläse 2 erzeugten Luftstrom erfaßt und zum Verteilerkopf 4 geblasen wird. An dem Verteilerkopf 4 befinden sich die verschiedenen Abgänge 8, an denen jeweils eine Saatleitung 9 angeschlossen ist. Jede diese Saatleitungen 9 führt jeweils zu einem Säschar 5. Über den Verteilerkopf 4 wird das Saatgut auf die einzelnen Abgänge 8 gleichmäßig aufgeteilt und gelangt über die Saatleitungen 9 zu den Säscharen 5, mittels derer das Saatgut im Boden 10 abgelegt wird.

Wenn an sämtlichen Abgängen 8 jeweils eine Saatleitung 9 bzw. diesen Abgängen 8 jeweils ein Säschar 5 zugeordnet ist, wird das Saatgut jedem Säschar 8 bzw. jeder Saatleitung 9 in gleich großen Mengen über den Verteilerkopf 4 zudosiert.

Wenn nun in gleichmäßigen Abständen beim Ausbringen des Saatgutes Fahrgassen angelegt werden soll, indem bei den zu den Säscharen 5', die als Fahrgassensäschare bezeichnet werden, führenden Saatleitungen das Saatgut über die als Absperrschieber 11 ausgebildeten Absperreinrichtungen beim Anlegen der Fahrgassen zugesperrt werden, wird das Saatgut wieder in den Vorratsbehälter über die Rückleitung 12 in den Vorratsbehälter 1 zurückgeleitet. Somit wird also das bei dem Anlegen der Fahrgassen dem verschlossenen Abgang zugeleitete Saatgut über den Absperrschieber 11 wieder in den Vorratsbehälter 1 zurückgeleitet. Der Absperrschieber 11 wird über den Elektromagneten 13 elektromagnetisch betätigt. Über das Kabel 14, welches mit der nicht dargestellten Fahrgassenschaltung verbunden ist, wird der Elektromagnet 13 und somit der Schieber 11 betätigt. Der Schieber 11 ist in der Stellung eingezeichnet, bei der über den sich in dem Schieber befindenden Verbindungskanal 15 der Abgang 8, der zu einem Fahrgassensäschar 5' führt, mit der Rücklaufleitung 12 verbunden ist, so daß das dem Abgang 8' zudosierte Material über den Verbindungskanal 15 des Schiebers 11 der Rücklaufleitung 12 zugeleitet und somit in den Vorratsbehälter 1 zurückgeführt wird. An der Rücklaufleitung 12 ist noch die Querschnittseinstellvorrichtung 16 angeordnet, mit der der Querschnitt der Rücklaufleitung 12 einzustellen ist. Über diese Einstellvorrichtung 16 ist der Querschnitt der Rücklaufleitung 12 derart einzustellen, daß der Querschnitt kleiner ist als der Querschnitt der Saatleitungen 9. Des weiteren ist über die Einstellvorrichtung 16 der Querschnitt der Leitung 12 auf die entsprechende Länge der abzusperrenden jeweiligen Saatleitung 9 einstellbar, damit der durch die abgesperrte Leitung 9 an sich aufgebrachte Staudruck aufrechterhalten bleibt.

Wenn an dem Verteilerkopf 4 weniger Saatleitungen 9 bzw. weniger Säschare 5 als Abgänge 8 an dem Verteilerkopf 4 vorhanden sind angeschlossen sind, werden an den nicht benötigten Abgängen 8'' die Rückführungsleitungen 17 angeschlossen, die das dem Abgang 8' zudosierte Material in den Vorratsbehälter 1 zurückleiten. In der Leitung 17 kann noch der Zyklon 18 angeordnet sein, damit das über die Rücklaufleitung 17 in den Vorratsbehälter zurückgeleitete Material und über den Luftstrom der Leitung 17 das sich im Vorratsbehälter 1 befindliche Saatgut nicht aufgewirbelt wird. Des weiteren ist an dem Abgang 8'' die Querschnittseinstellvorrichtung 16 angeordnet, mit der der Querschnitt des jeweiligen Abganges 8'' entsprechend eingestellt werden kann, damit nur in der gewünschten Weise Luft über den Abgang 8' entweichen kann.

Amazonen-Werke

H. Dreyer GmbH & Co. KG

Am Amazonenwerk 9 - 13

4507 Hasbergen-Gaste

ANR 1 000 667

P a t e n t a n s p r ü c h e

1.

Pneumatische Verteilmaschine zum Verteilen von insbesondere Saatgut mit einem zentralen Dosiersystem von dem aus das dosierte Saatgut über einen Verteilerkopf den an dem Verteilerkopf über Saatleitungen angeschlossenen Säscharen gleichmäßig zugeführt wird, wobei einzelne Abgänge von dem Verteilerkopf über Absperreinrichtungen derart verschließbar sind, daß einer geringeren Anzahl von Säscharen als der Anzahl von Abgängen an dem Verteilerkopf das Saatgut zuführbar ist, dadurch gekennzeichnet, daß die an den zu verschließenden Abgängen (8',8'') angeordneten Absperreinrichtungen (11,17) derart ausgebildet sind, daß das diesen Abgängen (8',8'') zudosierte Material wieder in den Vorratsbehälter zurückleitbar ist.

2.

Pneumatische Verteilmaschine nach Anspruch 1, wobei an der Verteilmaschine eine Fahrgassenschalteinrichtung mit einer in periodischer Wiederkehr zu betätigende Absperreinrichtung für die Zufuhr von Saatgut zu den in den Fahrgassen angeordneten Säscharen angeordnet ist, dadurch gekennzeichnet, daß über diese Absperreinrichtung (11) beim dem Absperren der Saatgutzufuhr zu den Fahrgassensäscharen (5') das den Fahrgassensäscharen (5') zudosierte Saatgut wieder in den Vorratsbehälter (1) zurückgeleitet wird.

3.

Verteilmaschine nach Anspruch 1 oder 2, dadurch gekennzeichnet, daß die Absperreinrichtungen als Schieber (11) der als Klappen ausgebildet sind.

4.

Verteilmaschine nach Anspruch 3, dadurch gekennzeichnet, daß die Absperreinrichtung (11) elektromagnetisch betätigbar sind.

5.

Verteilmaschine nach Anspruch 1 oder 2, dadurch gekennzeichnet, daß die Absperreinrichtung (11,17) für die Zurückleitung des Saatgutes in den Vorratsbehälter (1) jeweils einen kleineren Querschnitt als den entsprechenden Querschnitt der Saatleitungen (9) aufweisen.

6.

Verteilmaschine nach Anspruch 5, dadurch gekennzeichnet, daß der Querschnitt der Öffnungen der zurückleitenden Leitung (8',8'') der Absperreinrichtung (11,17) einstellbar bzw. entsprechend kleiner eingestellt ist.

7.

Verteilmaschine nach Anspruch 6, dadurch gekennzeichnet, daß der Querschnitt auf die entsprechende Länge der abzusperrenden Saatleitung (8',8'') einstellbar bzw. eingestellt ist.

FIG. 1

FIG. 2

FIG.3

FIG.4

FIG.5

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | US-A-1 330 838 (C. BRISTOW) <br> * Seite 1, Zeilen 26-34 * | 1 | A 01 C 7/08 |
| Y | | 2-4 | |
| | --- | | |
| X | DE-A-2 603 088 (L. ERNST) <br> * Ansprüche 1, 6, 7 * | 1 | |
| Y | * Anspruch 9 * | 3,4 | |
| | --- | | |
| Y | DE-B-2 851 797 (AMAZONEN-WERKE) <br> * Spalte 1, Zeile 51 - Spalte 2, Zeile 1 * | 2 | |
| | ----- | | |

**RECHERCHIERTE SACHGEBIETE (Int. Cl.4)**

A 01 C 7/00

Der vorliegende Recherchenbericht wurde für alle Patentansprüche erstellt.

| Recherchenort | Abschlußdatum der Recherche | Prüfer |
|---|---|---|
| BERLIN | 13-10-1987 | SAMWEL P.N. |